# EUROPEAN PATENT APPLICATION

(11) **EP 0 654 218 A2**
(43) Date of publication of application: **24.05.1995**
(21) Application number: 94500185.7
(22) Date of filing: 18.11.1994
(51) Int. Cl.: A21D 15/00, A21D 15/04, A21D 13/00, A21D 8/04, A21D 2/36

(54) **Baking and pastry products with long conservation**

(30) Priority: 22.11.1993 ES 9302440
(71) Applicant: JOSE MIGUEL POVEDA, S.A. (JOMIPSA), E-03550 San Juan - Alicante (ES)
(72) Inventor: Barber Perez, Salvador, Espanola I + D, E-46113 Moncada-Valencia (ES); Orotola Santacreu, Concepcion Espanola I+D, E-46113 Moncada (Valencia) (ES)
(74) Representative: Urizar Anasagasti, José Antonio

(57) **Abstract**

Bakery and pastry products with long conservation, related to a type of bread of fine and soft crust, ready to use, product of the fermentation and cooking of bread doughs, packaged in a high barrier gas and water proof pack, and capable of conserving its eatable quality during ambient storage for extraordinary prolonged periods of more than two years.

## Description

The invention, for which a patent is requested, relates to a series of products which result from bakery dough, formulated with mixtures of ingredients suitably dosed, which are fermented by microorganisms of the fermentation itself. The base product is susceptible of being formulated and made in different manners, thus obtaining a range of products with their own commun identity and different features and quality attributes. This new type of bread has features on the basis of being a product ready to be eaten as the result of cooking in a directly or indirectly heated oven, of a dough obtained by a mixture of wheat or rye flour, or a mixture thereof with or without addition of flours of other cereals and tubercles, drinking water and eatable salt, having or not having additions of sugars and of two or more additives and technological coadjutants, fermented by the microorganisms of the bread fermentation itself, such as Saccharomyces cerevisiae and Lactobacillus plantarum.

Furthermore, another feature is the fact of being a bread with soft and fine crust, of a typical golden-brown colour, with pleasant smell and taste, density between 0.15 and 0.45, pH between 4.4 and 5.4, activity of water between 0.81 and 0.87 and humidity between 24 and 38%, as well as being a product of a very high capacity of retention of humidity in comparison with ordinary bread (french type), loaf bread (american type) and/or the hamburger type bread, usually used in the commerce, even though it requires a casing of high gas proof and water vapor proof barreir in order to reach its extra-ordinary prolonged duration of the same.

Additionally, another feature of this new type of bread is the fact of being a long conservation bread of more than two years, a period in which it maintains its sensorial characteristics, aroma, taste, consistency within the limits of a very good acceptability (it is always maintained soft) having the following microbiological characteristics:

| | |
|---|---|
| Total recount of mesophile aerobion | Less than 1X10² cfu/g |
| Enteric-bacteria | Abs./g |
| Escherichia coli | Abs./g |
| Staphilococcus aureus | Abs./g |
| Salmonella | Abs./25g |
| Bacillus cereus | Abs./g |
| Clostridium sulfite-reductors | Max. 1X10² cfu/g |
| Moulds and yeasts | Max. 1X10² cfu/g |

During a prolonged storage at temperatures higher than 0^{º}C, the conventional packaged bread experiments alterations of physical nature such as moisture migration, changes in the crystalinity of starch, etc., microbiological nature such as growing moulds, yeasts and bacteria, production of toxin, and finally chemical nature such as oxidation, browning, etc., which limit its life of conservation.

While the hardening and loss of softness of the crumb is one of the main reasons of the loss of acceptability of the bread, the microbial stability of the product is the first objective to be achieved. The available means for controlling the growth and the multiplication of microflora are abundant (heat, ionizer radiations, high pressures, regulation of water activity, osmotic pressure, pH, microbicide and microstatic agents, etc.). Nevertheless, in order to assure the microbial stability during prolonged periods, the application of any of these technics requires excessively strict conditions which would result in serious deterioration of quality of the bread.

At present, bread is one of the few foods, and this may be considered as an exceptional case, for which a satisfactory solution has not been found for its conservation. Methods are known which assure relatively short periods of storage, either as to its microbiological conservation life (International application WO8700506 publication date 29/01/87), (Spanish patent no. 7731710 publication date 29/01/78), (French patent no. FR 2444411), (German Democtratic Republic patent no. DD 132702), (patent of Federal Republic of Germany no. DE 2410447), (European patent no. 368603 publication date 16/05/90), (French patent no. 2062520 publication date 25/06/71), (Federal Republic of Germany patent no. 1586178 publicaion date 26/08/71), (German Democtratic Republic patent 2297643, publication date 11/05/83), (US patent no. 4550026 publication date 29/10/85), or with respect to the conservation of its sensorial characteristics (United States of Amercia patent no. 4615888 publication date 07/10/86), (International application WO92/17069, publication date 15/10/92), (US patent no. 4233321, publication date 11/11/80), (US patent no. 4382096 publication date 03/05/83), (US patent no. 4320151 publication date 16/03/82), (US paten no. 4654216 publication date 31/03/87), the prolongation of one characteristic being to the detriment of the other. The improvements which have been made during the recent years with respect to the reduction of the rate of aging of the bread contemplate very short storage periods, from 3 to 4 days (US patent no. 4382096, publication date 03/05/83), (US patent no. 4320151 publication date 16/03/82), (Unted States of America patent no. 4615888 publication date 07/10/86), (US patent no. 4233321 publication date 11/11/80), until one week (International application no. WO92/17069 publication date 15/10/92), (US patent no. 4654216 publication date 31/03/87). Said improvements, protected by patents, are based on the use of ingredients which increase the absorption capacity of the water, such as mutant starches (United States of America patent no. 4615888 publication date 07/10/86), (International application no. WO92/17069 publication date 15/10/92), lactose (US patent no. 4233321 publication date 11/11/80) or special flours (US patent no. 4382096 publication date 03/05/83) and enzymes which reduce the retrogradation (US patent no. 4320151 publication date 16/03/82), (US patent no. 4654216 publication date 31/03/87). The reduction of the retrogradation of starch, the principle cause of the change in the texture of the crumb of the bread during storage (PYLER, E.J. 1988 Baking Science and Technology I and II. 3rd ed. Sosland Publ. Co., Kansas, USA), is also achieved by maintaining storage temperatures between 30^{º}C and 50^{º}C (Federal Republic of Germany patent no. 2940242 publication date 09/04/81), however this is only feasable for very short storages, because the chemical transformations which take place rapidly at such temperatures, e.g. Maillard browning, lipid oxidation, alter the same substantially, making unfeasable its application for a prolonged conservation.

On the other hand, the improvements made in order to prolong the microbiogical conservation of bakery products stored at ambient all refer to periods from a few weeks (International application no. WO87/00506, publication date 29/01/87) until various monthos but not more than a year (Spanish patent no. 7731710, publication date 21/10/78), (French patent no. FR 2444411), (US patent no. 4550026, publication date 29/10/85), and base the conservation upon the change in the atmosphere which surround the product (International application no. WO87/00506 publication date 29/01/87), (Spanish patent no. 7731710 publication date 21/10/78), (European patent no. 0368603 publication date 16/05/90), (French patent no. 2062520 publication date 25/06/71), (US patent no. 4550026 publication date 29/10/85), or in the thermal treatment of the product after being packaged (Spanish patent no. 7731710 publication date 21/10/78), (French patent no. 2444411), (German Democtratic Republic patent no. DD-132702), (European patent no. 0368603 publication date 16/05/90), (Federal Republic of Germany patent no. 1586178 publication date 26/08/71), (German Democtratic Republic patent no. 2297643 publication date 11/05/83). One type of the latter breads, canned pan (Matz, S.A. 1972 Bakery Technology and Engineering. The Avi Publishing Company, Inc., Westport, Connecticut), ferments and bakes the dough in a can or a final package having its cap in place but without being tightly sealed, this operation being performed when going out of the oven. In other cases the bakery product is not ready for consumption, requiring reheating or additional cooking (International application no. WO87/00506 publication date 29/01/87), (Spanish patent no. 7731710 filing date 21/10/78), (European patent no. 0368603 publication date 16/05/90).

The bakery product, object of the present invention is distinguished from other long ambient conservation bakery products basically in that it is conserved during extraordinary long periods, more than two years, having a high level of organoleptic quality, and is not a canned bread or bread in conserve as mentioned hereinabove (Matz, S.A., 1972 Bakery Technology and Engineering. The Avi publishing Company, Inc. Westport, Connecticut, USA), from which it is distinguished by its sensorial characteristics, by the type of the package and the packaging which form part of its identity, and also by the manufacturing process. The invention relates to a type of bread of fine and soft crust, and soft crumb, ready for consumption, being a product of fermentation and cooking of bread-making dough, packaged in a flexible container having high gas and water vapor proof barrier. The sensorial quality of the product object of the invention, conditioned by the formulation and the process of fermentation is excelent. Having variable format as desired which may be regular and symmetric or not, having tender, plane and soft to touch external surface, golden to toasted brown colour with or without brilliance, a slightly sweet and tempting aroma. The structure of the crumb is of high fineness and uniformity and white cream to brown colour depending on the ingredients, for example granes of cereals, integral flour, etc, and soft and fair eatability and pleasant taste, conditioned by the ingredients, for example butter, spices, etc; density between 0.15 and 0.45 pH between 4.4 and 5.4, activity of water between 0.81 and 0.87 and moisture between 24 and 38%.

The medium energetic value of the bread, object of the present invention varies between 800 and 2000Kj/100g, preferably between 1000 and 1500 Kj/100g, depending on their specific formulation, reaching in some cases to higher values, when the latter contains for example dried fruits, candied fruits, etc., see hereinbelow. Its medium proteinic content varies from 8g/100g s.s. to 15g/100g s.s., preferably between 9 and 11g/100g s.s.; its lipid content being of 3g/100g s.s. to 8g/100g s.s., preferably from 5 to 6g/100g s.s.; the extractible nitrogen free content may vary between 75 and 85g/100g s.s. of product, and preferably from 80 to 82g/100g s.s. of raw fibre content, between 0.1 and 7%. The index of peroxides of the finished product is lower than 1 milliequivalent of O² /Kg of oil, preferably from 0.3 to 0.6 meq. O² /Kg of oil, being able to reach higher values only after a storage time higher than one year, being in any case maintained below 1.5 meq. O² /Kg of oil.

During a prolonged storage there only are produced minimal changes in some of the organoleptic characteristics of the product, always during the first days, and always within a narrow range in such a manner that it does not lose acceptability.

The microbiological quality of the product, object of the invention, is highly satisfactory, presenting banal microorganism or nule or very low indicator recounts and recounts of pathogen indicators being nule at all times: Total recount mesophile aerobion less than 10² cfu/g, Enteric-bacteria absence in 10g, Escherichia coli absence in 1g, Staphilococcus aureus absence in 1g, Salmonella absence in 25g, Bacillus cereus absence in 1g, Clostridium sulfite reductors less than 10² cfu/g, moulds and yeasts less than 10² cfu/g. During storage in freezing, refrigeration, ambient temperature or even at temperatures of 50^{º}C this type of bread is microbiologically stable during long periods of conservation, without producing development of any type of microorganism.

The especially adjusted balance of ingredients, only when combined with the particular conditions of processing developed *ad hoc* , especially the phases of fermentation or growth of the dough, of cooking and packaging, allows for obtaining final products as those described. The concatenation of the subsequent stages of the preparation process of the type of bread, object of this invention, does not have merely additive effects over the qualities of the final product but these qualities are a result of synergetic effects of said concatenation only achieved under special balance between the formulation and the conditions of the process.

The data obtained during the process of developing of the product object of this invention show this fact. As an example, a brief description of some results of experiments of inoculation of the dough with thermal-resistant spores of Bacillus subtilis and Bacillus cereus, chosen for being the most representative ones between the sporulated bacteria capable of altering the products of bakery. Starting from vials and spores of Bacillus subtilis (Merck Ref. 10649) a sterile physiological solution was inoculated with a typical bread dough such as the object of the present invention, and was subject to a thermal treatment of 100°C during 10 minutes. The following table includes the recounts of Bacillus subtilis before and after said thermal treatment:

| c.f.u. of Bacillus subtilis/ g | | |
|---|---|---|
| Media | Before thermal treatment | after thermal treatment |
| Model suspension | 4'1.10⁴ | 3'9.10⁴ |
| Bread dough object of invention | 1'5.10⁴ | absence |

Comparable results were obtained with an inoculation using B. cereus. In the model suspension, the thermal treatment practically does not affect the number of spores, and nevertheless, their total destruccion is achieved.

It is thus shown that the bread goes through a thermal treatment which is sufficient for assuring the commercial sterility of the product when leaving the oven, being maintained at subsequent stages , thus assuring the microbiological characteristics referred to hereinbelow.

Also contributing, and not to a small extent, to the final microbiological qualities, is the formulation, this being done by including directly and/or by means of natural generator agents such as preferments and concentrated enzymatic extracts, reductors of the activity of water, and of pH, microbicides and mycostatics. Likewise, the type and proportion of the ingredients contributes, not to a small extent, to the sensorial qualities of the final product, particularly to the outstanding property of that in the long period of conservation, more than two years, the bread maintained tender, with good organoleptic capacity. The bread dough is obtained starting from a base flour, cereals, tubercle and/or mixtures thereof, containing a high percentage (5 to 50% of sugars and dextrines of low polimerization grade (GP<11) and/or catalyst enzymes, mainly alpha-1.4 and alpha-1.6 glucopyranosyls provided by the flour base; drinkable water with salt added thereto or not; lipid containing fractions with emulgent properties such as phosphatydylcholine or mono-glycerides; different percentages (0.2-10%) hydrocolloids gelling agents, such as carrageens and xanthans and/or modified starches such as ethers and esters of starch; polyhydric alcohols such as D-glucitol, D-mannitol and/or trihydroxypropane, in proportions of 0.3 to 25%; pH regulators such as citric acid, potassium acetate, individually or in a mixture, without surpassing 3g/kg of flour used; and conservers such as sorboyl palmitate, sorbic acid and/or sodium diacetate, isolated or as a whole, in concentrations less the 3000 ppm.

In addition to the ingredients described hereinabove, others such as condiments, aromatizers, flavourizers, etc., may be added in mixtures and different proportions, giving way to an extended range of alternative products. Furthermore, flours of different cereals, degrees of extraction and complete or broken granes may be mixed. It may include either in the initial dough or at the moment of forming, different fillings from flavoured butters or other pastes which melt during the cooking, to meat, dairy and vegetal products. The shape of the bread, which may be varied as desired, allows for obtaining any type of pieces, providing a wide range of products, for example, from the most spongy ones to those with higher density, individual portions or pieces for slicing.

Having sufficiently described the nature of the present invention as well as one way of taking it into practice, it only remains to be added that it is possible to introduce changes in the materials as long as they do not vary substantially the features wich are claimed as follows.

## Claims

**1.-** Bakery and pastry products with long conservation, characterised by being products resulting from the cooking of a dough obtained with flour, drinkable water, eatable salt, having or not having sugars, and with two or more additives and technological coadjutants, which is fermented by microorganisms of the bread fermentation itself, baked and packaged, thus becoming ready for the consumption having the following distinctive identity features:
a) they are conserved at ambient temperatures during more than two years, free of microbial proliferation and maintaining high acceptability of their physico-chemical characteristics.
b) they are of soft and fine crust, of typical golden-brown colour, of sweet and pleasant smell and taste, having soft crumb with fair volume, with density between 0.15 and 0.45 g/cc, preferably between 0.26 and 0.30 g/cc, pH between 4.4 and 5.4, preferably between 4.7 and 5.0, water activity between 0.81 and 0.87, preferably between 0.84 and 0.85, and moisture between 24% and 38%, preferably between 27% and 30%.
c) Their microbiological characteristics meet the following specifications: total recount of mesophile aerobion less than 10² cfu/g, Enteric-bacteria absence in 1g, Escherichia coli absence in 1g, Staphilococcus aureus absence in 1g, Salmonella absence in 25g, Bacillus cereus absence in 1g, Clostridium sulphite reductors less than 10² cfu/g, Moulds and yeasts less than 10² cfu/g.

**2.-** Bakery and pastry products with long conservation, according to claim 1, characterised by being products in which the dough is obtained from a flour base, of wheat, other cereals, tubercules and/or mixtures thereof containing a high percentage (5% to 50%) of sugar and dextrines of low grade of polymerization (GP<11) and/or catalyst enzymes of their generation in adequate conditions, starting mainly form alpha-1,4 and alpha-1,6 glucopyranosyls provided by the flour base.

**3.-** Bakery and pastry products with long conservation, according to claim 1, characterised by being products in which the formulation includes various percentages (0.2%-10%) of hydrocolloids gelling agents, such as carrageens and xanthans and/or modified starch such as ethers and esters of starch and/or polyhydric alcohols such as D-glucitol, D-mannitol and/or trihydroxypropano in proportions of 0.3% to 25%.

**4.-** Bakery and pastry products with long conservation, according to claim 1, characterised by being products in which the formulation includes ingredients and/or additives with retarded properties of the retrogradation of starch such as lipids containing fractions with emulgent properties such as phosphatydylcholine or mono-glycerides.

**5.-** Bakery and pastry products with long conservation, according to claim 1, characterised by being products in which the formulation includes components of formulation with pH regulating properties such as citric acid, potassium acetate, individually or in a mixture, without surpassing 3g/kg of the flour used.

**6.-** Bakery and pastry products with long conservation according to claim 1, characterised by being products which contain ingredients with conserver properties such as sorboyl palmitate, sorbic acid, and/or sodium diacetate, isolatedor as a whole, in concentrations lower than 3000 ppm, included in the formulation and/or applied on to the surface.

**7.-** Bakery and pastry products with long conservation, according to claim 1, characterised by being products in which the dough, previously fermented or not, grows by means of leavening chemical agents.

**8.-** Bakery and pastry products with long conservation, according to the previous claims, characterised by being alternative products derived from the base products as defined in claim 1, containing condiments, colourings, aromatizers, taste modifiers and ingredients and preparations for nutritial, dietetic and/or special regimes.

**9.-** Bakery and pastry products with long conservation, according to the previous claims, characterised by being alternative products derived form the base products as defined in claim 1, filled or garnished with different classes of fruit or sweet or salty preparations (butters, creams, stuffings of any type).

**10.-** Bakery and pastry products with long conservation, according to the previous claim, characterised in that the package is a flexible bag of complex or multilayer polymeric material, constituted by, for example,polyester, aluminum and polyethylene of high gas and water vapor proof barrier and resistent to high tension and seeling force.

**11.-** Bakery and pastry products with long conservation, according to the previous claims, characterised in that the packaging is carried out by displacement or by the evacuation of the interior oxygen, and final injection of gas, such as nitrogen, carbon anhydride, etc, or a mixture thereof.
